# EUROPEAN PATENT APPLICATION

(11) **EP 2 597 602 A1**
(43) Date of publication of application: **29.05.2013**
(21) Application number: 12193439.2
(22) Date of filing: 20.11.2012
(51) Int. Cl.: G06Q 10/06

(54) **Aircraft trending systems and methods**

(30) Priority: 28.11.2011 US 201113305091
(71) Applicant: The Boeing Company, Chicago, IL 60606-2016 (US)
(72) Inventor: Yost, Dennis, Seattle, WA 98124 (US)
(74) Representative: McLeish, Nicholas Alistair Maxwell

(57) **Abstract**

Systems and methods of aircraft trending are described. In one example, a method of aircraft trend analysis includes receiving, at a computing device, data from a plurality of aircraft in a fleet of aircraft. The data includes system level data for each of the plurality of aircraft. The received data is stored in a database. The computing device analyzes the stored data to identify fleet trends and generates one or more trend analysis reports for the fleet based at least in part on the fleet trends.

## Description

### BACKGROUND

The field of the disclosure relates generally to trend monitoring and, more particularly, to aircraft trending systems and methods.

Vehicles, particularly commercial air, marine and land vehicles, typically include some type of performance monitoring system that records data regarding the vehicle performance, which includes the performance of the various components of the vehicle, such as a fault in one of the vehicle subsystems. The data includes a record of certain performance events that occur during the operation of the vehicle. The performance monitoring system typically conducts data collection and reports all of the data collected to the user. The user then may utilize the data in determining the type of maintenance, if any, that the vehicle may need. For example, if the data indicates that a particular component of the vehicle is malfunctioning or that the performance of one or more components may contribute to a vehicle failure in the future, then the user can perform the appropriate maintenance on the vehicle at the next opportunity.

Such known systems are useful for identifying problems with a particular vehicle and tracking maintenance and repairs to the vehicle, but generally do not aid in identifying issues arising in groups of similar vehicles, and do not aid in predicting issues that may arise in other similar vehicles.

### BRIEF DESCRIPTION

In one aspect, a method for aircraft trend analysis is provided. The method includes receiving, at a computing device, data from a plurality of aircraft in a fleet of aircraft. The data includes system level data for each of the plurality of aircraft. The received data is stored in a database. The computing device analyzes the stored data to identify fleet trends and generates one or more trend analysis reports for the fleet based at least in part on the fleet trends.

In another aspect, an aircraft trending system includes a processing device and a memory device communicatively coupled to the processing device. The system is programmed to receive data from a plurality of aircraft in a fleet of aircraft. The data includes system level data for each of the plurality of aircraft. The system is programmed to store the received data in a database, analyze the stored data to identify fleet trends, and generate one or more trend analysis reports for the fleet based at least in part on the fleet trends.

In still another aspect, a method of providing aircraft trend analysis includes collecting aircraft data from a fleet of aircraft operated by one or more airline operators, storing the received data in a database, analyzing the stored data to identify fleet trends, generating one or more trend analysis reports for the fleet based at least in part on the fleet trends, and providing a graphical user interface (GUI) to permit a user to access the generated trend analysis reports

The features, functions, and advantages that have been discussed can be achieved independently in various embodiments or may be combined in yet other embodiments further details of which can be seen with reference to the following description and drawings.

### BRIEF DESCRIPTION OF THE DRAWINGS

FIG. 1 is a flow diagram of an aircraft production and service methodology.
FIG. 2 is a block diagram of an aircraft.
FIG. 3 is a block diagram of a fleet of aircraft.
FIG. 4 is a diagram of trending system including a data processing device.
FIG. 5 is a flow diagram of an exemplary method of aircraft trend analysis.
FIG. 6 is an exemplary graphical user interface of the trending system shown in FIG. 4.
FIG. 7 an exemplary trend report generated by the trending system shown in FIG. 4.

### DETAILED DESCRIPTION

As used herein, an element or step recited in the singular and proceeded with the word "a" or "an" should be understood as not excluding plural elements or steps unless such exclusion is explicitly recited. Furthermore, references to "one embodiment" of the present invention or the "exemplary embodiment" are not intended to be interpreted as excluding the existence of additional embodiments that also incorporate the recited features.

Exemplary aircraft trending methods and systems are described herein. The exemplary systems provide predictive analysis of aircraft fleet issues. As such, aircraft downtime may be substantially minimized by identifying potential issues based on analysis of trends within a fleet. Potential problems may be remedied prior to occurrence, thereby avoiding delay. In one embodiment, technical effects of the methods, systems, and computer-readable media described herein include at least one of: (a) receiving data from a plurality of aircraft in a fleet of aircraft, (b) storing the received data in a database, (c) analyzing the stored data to identify fleet trends, and (d) generating one or more trend analysis reports for the fleet based at least in part on the fleet trends. The stored data includes system level data for each of the plurality of aircraft.

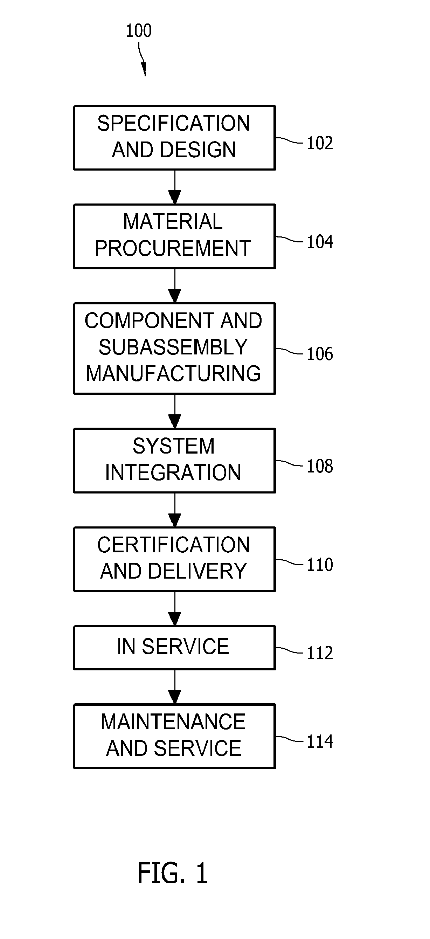

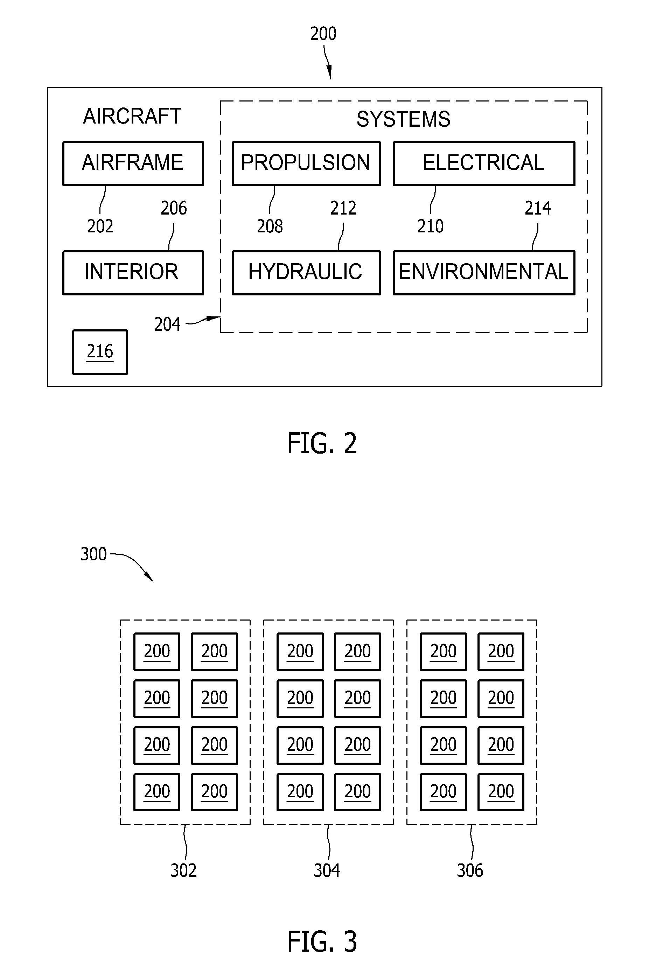

Referring more particularly to the drawings, embodiments of the disclosure may be described in the context of aircraft manufacturing and service method 100 as shown in FIG. 1 and an aircraft 200 as shown in FIG. 2. During pre-production, aircraft manufacturing and service method 100 may include specification and design 102 of aircraft 200 and material procurement 104.

During production, component and subassembly manufacturing 106 and system integration 108 of aircraft 200 takes place. Thereafter, aircraft 200 may go through certification and delivery 110 in order to be placed in service 112. While in service by a customer, aircraft 200 is scheduled for routine maintenance and service 114 (which may also include modification, reconfiguration, refurbishment, and so on).

Each of the processes of aircraft manufacturing and service method 100 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in FIG. 2, aircraft 200 produced by aircraft manufacturing and service method 100 may include airframe 202 with a plurality of systems 204 and interior 206. Examples of systems 204 include one or more of propulsion system 208, electrical system 210, hydraulic system 212, and environmental system 214. Any number of other systems may be included in this example. Further, any of systems 204 may include one or more subsystems and each system 204 and/or subsystem typically includes one or more components. Although an aerospace example is shown, the principles of the disclosure may be applied to other industries, such as the automotive industry.

Aircraft 200 includes a data gathering element 216. The data gathering element 216 may be any type of system or device capable of receiving data associated with the operation and performance of aircraft 200. For example, the data gathering element 216 may be a central maintenance computer (CMC) and/or an aircraft condition monitoring system (ACMS). A CMC and an ACMS monitor, collect, consolidate and report performance data for the components of aircraft 200. As such, the CMC and/or ACMS provide the aircraft performance data that is utilized and further analyzed as described herein.

The aircraft data includes any type of performance-related data regarding the overall operation of the aircraft 200 or any component or combination of components of aircraft 200. The performance-related data may include information regarding a fault experienced by aircraft 200 or any component or combination of components of the vehicle. In addition, the performance-related data may include prognostic information regarding the vehicle or any component or combination of components of aircraft 200 that may be used to indicate whether a fault is likely. In particular, the performance-related data generally includes a record of certain performance events that occur during the operation of aircraft 200. For example, a performance event may be a failure of a component or a portion of a component, which may affect the performance of aircraft 200 either immediately or eventually. A performance event may result in a visible indicator or alert being displayed to an operator of aircraft 200, sometimes referred to as flight deck effects (FDE), or may result in a data entry, sometimes referred to as a message, without resulting in an alert displayed to an operator of the aircraft.

Data gathering element 216 may also receive other types of aircraft data that may be integrated with the performance-related data. For example, data associated with the design of aircraft 200, a maintenance history of aircraft 200, a maintenance supply list for aircraft 200 and/or an aggregate performance for aircraft 200 may be received by the data gathering element 216 and integrated with the aircraft performance data that is collected by data gathering element 216. This additional data may be provided in various manners, including being originally provided by the manufacturer of the vehicle and updated by the maintenance personnel.

FIG. 3 is a block diagram of a fleet 300 of aircraft. As used herein, a fleet of aircraft refers to a plurality of aircraft of generally the same type or model. Fleet 300 includes a plurality of aircraft 200. Each aircraft 200 is generally the same type, or model, of aircraft. Each individual aircraft in fleet 300 may be identified by a unique tail number. In the exemplary embodiment, fleet 300 is divided among multiple airline fleets. For example, a first airline operator owns and/or operates airline fleet 302, a second airline operator owns and/or operates airline fleet 304, and a third airline operator owns and/or operates airline fleet 306. In other embodiments, fleet 300 may be divided among more or fewer, including one, airline operators. Moreover, each airline operator may own and/or operate more than one airline fleet, i.e. may own and/or operate more than one type or model of aircraft 200.

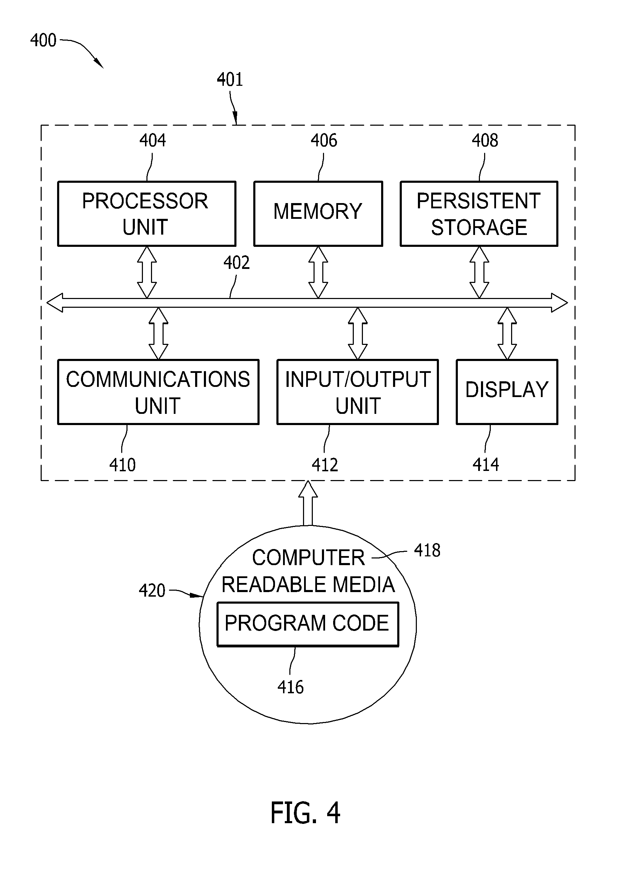

FIG. 4 is a diagram of an aircraft trending system 400. In this illustrative example, trending system 400 includes a computing device 401. Computing device 401 includes communications fabric 402, which provides communications between processor unit 404, memory 406, persistent storage 408, communications unit 410, input/output (I/O) unit 412, and display 414.

Processor unit 404 serves to execute instructions for software that may be loaded into memory 406. Processor unit 404 may be a set of one or more processors or may be a multi-processor core, depending on the particular implementation. Further, processor unit 404 may be implemented using one or more heterogeneous processor systems in which a main processor is present with secondary processors on a single chip. As another illustrative example, processor unit 404 may be a symmetric multi-processor system containing multiple processors of the same type.

Memory 406 and persistent storage 408 are examples of storage devices. A storage device is any piece of hardware that is capable of storing information either on a temporary basis and/or a permanent basis. Memory 406, in these examples, may be, for example, without limitation, a random access memory or any other suitable volatile or nonvolatile storage device. Persistent storage 408 may take various forms depending on the particular implementation. For example, without limitation, persistent storage 408 may contain one or more components or devices. For example, persistent storage 408 may be a hard drive, a flash memory, a rewritable optical disk, a rewritable magnetic tape, or some combination of the above. The media used by persistent storage 408 also may be removable. For example, without limitation, a removable hard drive may be used for persistent storage 408.

Communications unit 410, in these examples, provides for communications with other data processing systems or devices. In these examples, communications unit 410 is a network interface card. Communications unit 410 may provide communications through the use of either or both physical and wireless communication links.

Input/output unit 412 allows for input and output of data with other devices that may be connected to data processing system 400. For example, without limitation, input/output unit 412 may provide a connection for user input through a keyboard and mouse. Further, input/output unit 412 may send output to a printer. Display 414 provides a mechanism to display information to a user.

Instructions for the operating system and applications or programs are located on persistent storage 408. These instructions may be loaded into memory 406 for execution by processor unit 404. The processes of the different embodiments may be performed by processor unit 404 using computer implemented instructions, which may be located in a memory, such as memory 406. These instructions are referred to as program code, computer usable program code, or computer readable program code that may be read and executed by a processor in processor unit 404. The program code in the different embodiments may be embodied on different physical or tangible computer readable media, such as memory 406 or persistent storage 408.

Program code 416 is located in a functional form on computer readable media 418 that is selectively removable and may be loaded onto or transferred to data processing system 400 for execution by processor unit 404. Program code 416 and computer readable media 418 form computer program product 420 in these examples. In one example, computer readable media 418 may be in a tangible form, such as, for example, an optical or magnetic disc that is inserted or placed into a drive or other device that is part of persistent storage 408 for transfer onto a storage device, such as a hard drive that is part of persistent storage 408. In a tangible form, computer readable media 418 also may take the form of a persistent storage, such as a hard drive, a thumb drive, or a flash memory that is connected to data processing system 400. The tangible form of computer readable media 418 is also referred to as computer recordable storage media. In some instances, computer readable media 418 may not be removable.

Alternatively, program code 416 may be transferred to data processing system 400 from computer readable media 418 through a communications link to communications unit 410 and/or through a connection to input/output unit 412. The communications link and/or the connection may be physical or wireless in the illustrative examples. The computer readable media also may take the form of non-tangible media, such as communications links or wireless transmissions containing the program code.

In some illustrative embodiments, program code 416 may be downloaded over a network to persistent storage 408 from another device or data processing system for use within trending system 400. For instance, program code stored in a computer readable storage medium in a server data processing system may be downloaded over a network from the server to trending system 400. The data processing system providing program code 416 may be a server computer, a client computer, or some other device capable of storing and transmitting program code 416.

The different components illustrated for trending system 400 are not meant to provide architectural limitations to the manner in which different embodiments may be implemented. The different illustrative embodiments may be implemented in a data processing system including components in addition to or in place of those illustrated for trending system 400. Other components shown in FIG. 4 can be varied from the illustrative examples shown.

As one example, a storage device in data processing system 400 is any hardware apparatus that may store data. Memory 406, persistent storage 408 and computer readable media 418 are examples of storage devices in a tangible form.

In another example, a bus system may be used to implement communications fabric 402 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, without limitation, memory 406 or a cache such as that found in an interface and memory controller hub that may be present in communications fabric 402.

Aircraft data collected by data gathering element 216 is provided to trending system 400. For example, data gathering element 216 may transmit the aircraft data to the trending system 400 or trending system 400 may access the aircraft data from the data gathering element 216. Data gathering element 216 may be located within the vehicle while the trending system 400 is located outside the vehicle, and there may be a communication link between the elements for the data to travel between the elements. Moreover, trending system 400 may be communicatively coupled to data gathering element 216 via a network, such as an intranet, the Internet, etc. Further, aircraft data may be collected from data gathering element 216 by another device or system and transferred from such other device to trending system 400. In addition, data gathering element 216 and/or the trending system 400 may include a storage element for storing any of the aircraft data collected. Moreover, data gathering element 216 may transmit aircraft data wirelessly to trending system, a data storage system, or any other system.

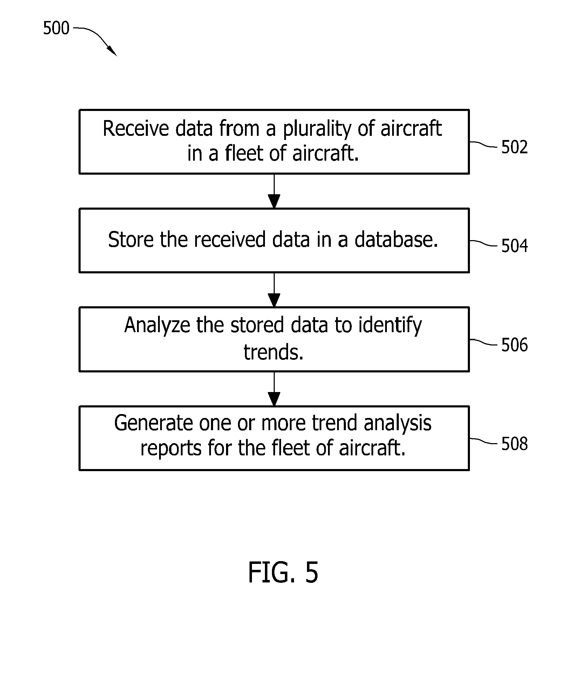

FIG. 5 is a flow diagram of an exemplary method 500 performed, for example, by trending system 400. A computing device, such as computing device 401, receives 502 data from a plurality of aircraft, such as aircraft 200, in a fleet of aircraft. The received data includes system level data for each of the plurality of aircraft. The data is stored 504 in a database and computing device 401 analyzes 506 the stored data to identify trends. Computing device 401 generates 508 one or more trend analysis reports for the fleet of aircraft.

More specifically, computing device 401 receives aircraft data for each aircraft 200 gathered by each aircraft's data gathering element 216. In the exemplary embodiment, the aircraft data is received periodically from each aircraft 200. In one example, the aircraft data may be collected from each aircraft 200 following completion of each flight. In other embodiments, the aircraft data may be collected at other regular or irregular intervals. Moreover, in some embodiments, aircraft data is collected from each aircraft 200 by another system and provided to trending system 400. In such embodiments, the aircraft data may be collected from aircraft 200 at a same or different interval than the interval at which it is provided to trending system 400.

The aircraft data received by computing device 401 is stored in a database. In the exemplary embodiment, the stored data is not overwritten or otherwise deleted. Thus, the database stores historical data for each aircraft 200 in a fleet, such as fleet 300. The stored data may include data over any suitable time period. In one example embodiment, the stored data comprises data covering a time period of at least the prior two years. In other embodiments, greater or lesser time periods of data may be stored in the database. Moreover, if the data is not deleted or overwritten, the time period covered by the data will increase as trending system 400 is used over time.

The stored data is associated in the database with the particular aircraft 200 from which the data is received. In the exemplary embodiment, the stored data is associated with a particular aircraft by tail number. Thus, trending system 400 may generate reports showing trends among fleet 300 and still maintain identification of particular aircraft from which the data was received. Hence fleet level and aircraft level trend analysis and reporting may be performed. Moreover, by maintaining the association between stored data and the particular aircraft that generated it, more complex analysis may be performed by trending system 400. For example, an upward trend in messages relating to a particular system in fleet 300 may be analyzed by system 400 to determine which particular aircraft or subset of fleet 300 are contributing to the upward trend. Thus, for example, it may be determined whether the increasing trend is caused by newer planes, older planes, planes operated in a particular location, etc.

In the exemplary embodiment, the stored data is associated in the database with the date on which the data was generated. Thus, the stored data may be analyzed to identify date related, e.g. seasonal, trends. For example, the stored data may be analyzed to identify trends associated with external influences, such as operation during a particular season or month of the year. Moreover, in some embodiments, the stored data includes weather data. The stored data may thus be analyzed to identify trends correlated to weather conditions experienced by the aircraft from which the data was acquired.

The stored data is analyzed by computing device 401 to identify trends. As used herein, a trend is a general direction or tendency. More specifically, computing device analyzes the stored data to identify the total number of messages and/or problems for each system or subsystem in the aircraft of fleet 300 for a particular time period. By comparing the current total to one or more total from previous time periods, trending system 400 identifies the trend for each system or subsystem. The trend may be, for example, an increasing number of messages and/or problems, a decreasing number of messages and/or problems, or a relatively constant number of messages and/or problems. Moreover, the degree, or slope, of the trend may also be calculated. The degree of the trend is generally the change in the number of messages and/or problems over the time analyzed.

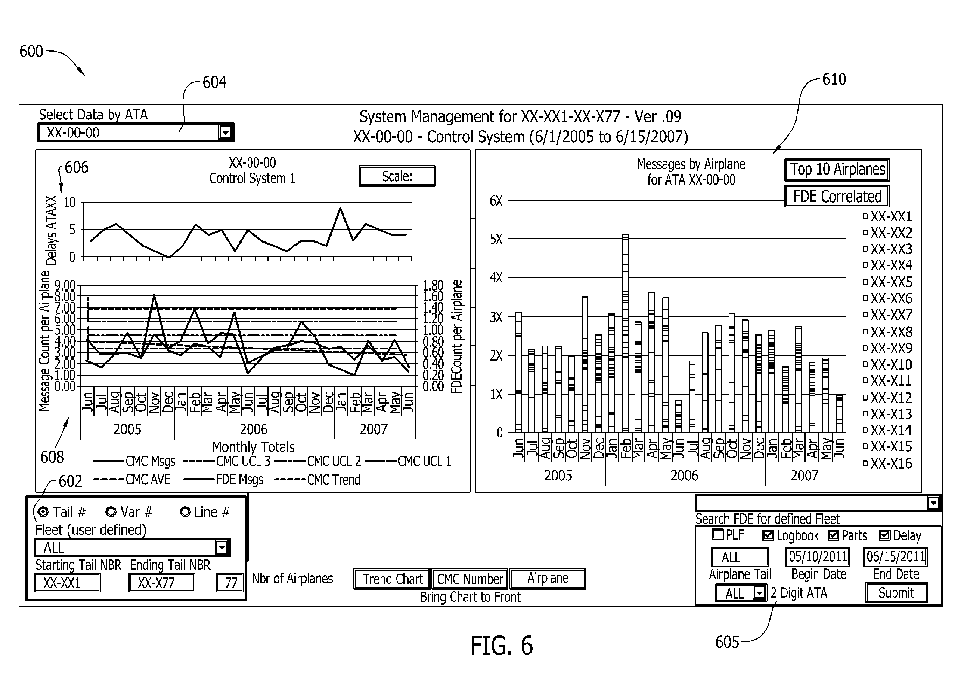

Computing device 401 generates one or more trend analysis reports based on the analysis. The reports may be provided to a user of trending system 400 via a graphical user interface (GUI). FIG. 6 is an example GUI 600 for trending system 400. In the exemplary embodiment, a user (e.g., a representative of an airline operator, a representative of an aircraft manufacturer, etc.) selects, via pull down menu 602, which fleet the user desires to analyze. In other embodiments, GUI 600 does not operate more than one fleet of aircraft. Moreover, the user may select particular aircraft by tail number and/or subsets of a fleet of aircraft. The user may also select the particular system or subsystem for which the user desires to view the trend analysis reports. In the exemplary embodiment, the user selects a system by Air Transport Association (ATA) of America number using pull down menu 604. A filter 605 permits the user to further filter, or limit, the results displayed via GUI 600.

In the exemplary embodiment, trending system 400 is accessed by a user and GUI 600 is displayed to the user, via a network, such as an Ethernet, the internet, a wireless network, etc., using, for example a web browser. In other embodiments, GUI 600 is embodied in a standalone application that accesses system 400 remotely via a network.

Exemplary GUI 600 displays several types of reports to the user. GUI 600 displays a delay report 606. Delay report 606 graphically presents the total number of delays associated with the selected system for the entire selected fleet for each month. A per airplane chart 608 graphs the CMC message count per aircraft and the FDE count per aircraft over a two year time span. Moreover, per airplane chart 608 graphs the CMC message average, and CMC message trend, and one, two, and three sigma control limits for the two year time frame. In other embodiments, longer or shorter time frames may be used. By visual inspection, a user can easily see that the CMC message trend for the displayed system is decreasing with a negative slope. A CMC messages per airplane report 610 is a bar graph of the number of CMC messages for the selected system during the displayed time period. Each section of a bar of report 610 represents a number of messages for a particular aircraft. Thus, by visual inspection of report 610, a user may identify particular aircraft that are experiencing a relatively large number of CMC messages for the selected system.

Another exemplary type of report that that may be generated and displayed to a user by trending system includes a spreadsheet report. The user may select the fleet, or subset of the fleet, the time period, and the system or systems to be displayed as a spreadsheet. A spreadsheet report may present the total number of messages for each particular aircraft (by tail number). Moreover, such spreadsheets may indicates the total number of messages for each particular CMC message, message code, and/or FD text.

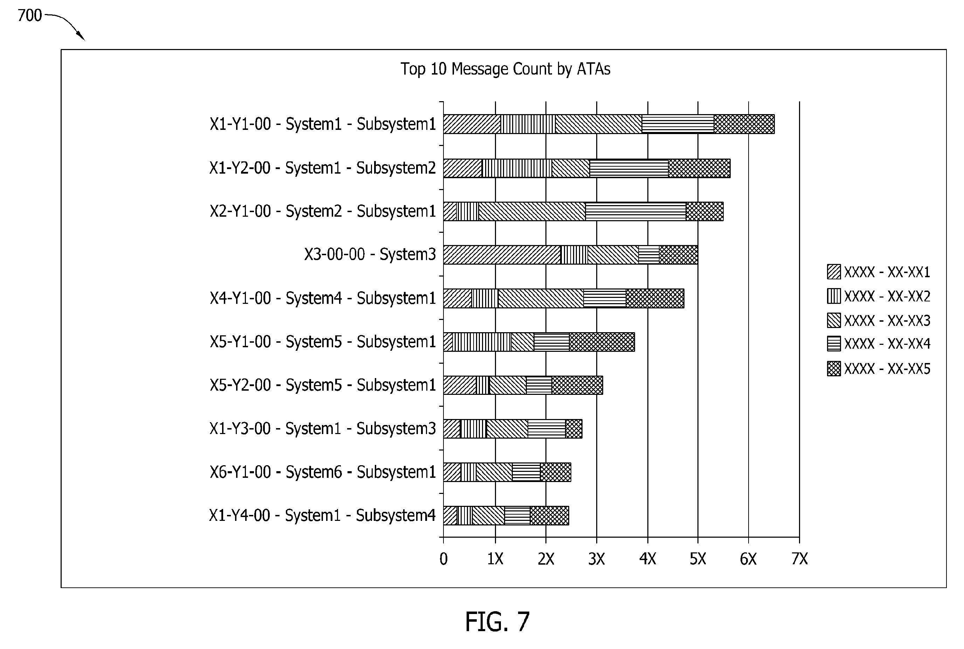

FIG. 7 is another exemplary trend analysis report 700 that may be generated and displayed to a user by trending system 400. More particularly, report 800 displays a bar graph of the top ten message counts for a fleet of aircraft. Each block within a bar represents a particular aircraft and is associated with its corresponding tail number. The width of each block is proportional to the number of messages for the particular aircraft.

In the exemplary embodiment, trending system 400 generates trend alerts. Trending system 400 determines the slope of the trend for each system and/or subsystem of the aircraft in fleet 300. A slope of zero indicates that the number of messages is constant, a negative slope indicates that fewer messages are being received than in previous time periods, and a positive slope indicates that more messages are being received that in previous time periods. Moreover, the magnitude of the slope correlates to the degree or severity of the trend. Thus, in the exemplary embodiment, trending system 400 generates an alert level for each system or subsystem based on the slope of the trend. For example, a system with a trend having a zero or negative slope may be assigned a green alert level. A system with a positive trend may be assigned a yellow, or caution, alert level. A system with a positive trend greater than a threshold value may be assigned a red, or stop, alert level. In the exemplary embodiment, the threshold value is about ten. Moreover, in the exemplary embodiment, trending system 400 generates trend alerts based on more than one time period. Trending system 400 generate alert levels based on the entire time period for which data is available and a recent, and more limited, time period. Thus, for example, trending system generates alert levels based on data for the last four months and alert levels based on data for the entire time period covered by data in the database. These different time base alert levels for a system may be the same or different.

Although described above with respect to systems and subsystems, in some embodiments trending system 400 is operable to perform trending analysis at a component level. Thus, instead of identifying, for example, flight control system trends, system 400 may identify and report on spoiler trends, flaperon trends, rudder trends, etc.

Lastly, the following paragraphs further describe additional aspects of the disclosure:
A1. A method of providing aircraft trend analysis comprising; collecting aircraft data from a fleet of aircraft operated by one or more airline operator; storing the collected data in a database; analyzing the stored data to identify fleet trends; generating one or more trend analysis reports for the fleet based at least in part on the fleet trends; and providing a graphical user interface (GUI) to permit a user to access the generated trend analysis reports.
A2. The method according to paragraph A1, wherein providing a GUI comprises providing a GUI to a remotely located user via a network.
A3. The method according to paragraph A1, wherein the GUI allows the user to select the trend analysis reports to be accessed.
A4. The method according to paragraph A3, wherein said analyzing the stored data and generating one or more trend analysis reports are preformed in response to a user selection via the GUI.
A5. The method according to paragraph A1, wherein the stored data includes system level data for each aircraft in the fleet and wherein analyzing the stored data comprises analyzing the stored data for a system with which the stored data is associated to identify a system trend.
A6. The method according to paragraph A5, wherein generating one or more trend analysis reports comprises generating at least one trend analysis report for each system with which the stored data is associated.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

This written description uses examples to disclose various embodiments, which include the best mode, to enable any person skilled in the art to practice those embodiments, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of aircraft trend analysis comprising:
Receiving (502), at a computing device, data from a plurality of aircraft in a fleet of aircraft, the data including system level data for each of the plurality of aircraft;
storing (504) the received data in a database;
analyzing (506), by the computing device, the stored data to identify fleet trends; and
generating (508), by the computing device, one or more trend analysis reports for the fleet based at least in part on the fleet trends.

2. The method according to Claim 1, wherein analyzing the stored data comprises analyzing the stored data for each system with which the stored data is associated.

3. The method according to Claim 2, wherein generating one or more trend analysis reports comprises generating at least one trend analysis report for each system with which the stored data is associated.

4. The method according to Claim 1, wherein analyzing the stored data comprises determining a trend as a change in a number of messages from a first time period to a second time period.

5. The method according to Claim 4, wherein generating one or more trend analysis reports includes generating a graph including a trend line.

6. The method according to Claim 1, wherein analyzing the stored data comprises determining trends based on external influences.

7. The method according to Claim 1, wherein generating one or more trend analysis reports comprises generating one or more trend alerts based on an upward trend exceeding a threshold.

8. An aircraft trending system comprising:
a processing device;
a memory device communicatively coupled to said processing device, said system programmed to:
receive (502) data from a plurality of aircraft in a fleet of aircraft, the data including system level data for each of the plurality of aircraft;
store (504) the received data in a database;
analyze (506) the stored data to identify fleet trends; and
generate (508) one or more trend analysis reports for the fleet based at least in part on the fleet trends.

9. The system according to Claim 8, wherein said system is programmed to analyze the stored data for a system with which the stored data is associated to identify a system trend.

10. The system according to Claim 9, wherein said system is programmed to generate at least one trend analysis report for each system with which the stored data is associated.

11. The system according to Claim 8, wherein said system is programmed to determine a trend as a change in the stored data over a period of time.

12. The system according to Claim 11, wherein said system is programmed to generate a graph including a trend line.

13. The system according to Claim 8, wherein said system is programmed to generate at least one graphical representation of the received data.

14. The system according to Claim 8, wherein said system is programmed to generate one or more trend alerts.
